# EUROPEAN PATENT APPLICATION

(11) **EP 4 847 110 A1**
(43) Date of publication of application: **02.12.2026**
(21) Application number: 24920186.4
(22) Date of filing: 17.12.2024
(51) Int. Cl.: B01D 17/022

(54) **OIL-WATER SEPARATION SHEET AND OIL-WATER SEPARATION ARTICLE**

(30) Priority: 23.01.2024 JP 2024007724
(71) Applicant: TEIJIN FRONTIER CO., LTD., Osaka-shi, Osaka 530-0005 (JP)
(72) Inventor: TAGAITO, Ryoichi, Osaka-shi, Osaka 530-0005 (JP)
(74) Representative: Carpmaels & Ransford LLP
(86) International application number: PCT/JP2024/044623
(87) International publication number: WO 2025/158830

(57) **Abstract**

An object is to provide an oil-water separation sheet and an oil-water separation article capable of separating oil and moisture without requiring suction, and a solution is to obtain an oil-water separation article by forming an oil-water separation sheet, which is an oil-water separation sheet containing a fiber with a single fiber diameter of 15.0 µm or less, treated with water absorption and oil repellency, and having air permeability of 50 cm3/cm²/sec or less, into a bag shape as needed, and sealing a water absorbent fiber therein.

## Description

### Technical Field

The present invention relates to an oil-water separation sheet and an oil-water separation article capable of separating oil and moisture.

### Background Art

In the related art, oil and the like are mixed in wastewater discharged from a store kitchen or a home, and there are problems such as clogging of sewer pipes due to fixation of oil and odor due to oxidation of oil. Therefore, a restaurant business operator takes measures such as providing a collector that separates and collects oils and fats in an oil-water mixed liquid. In addition, various oils such as soybean oil may be mixed with wastewater discharged from a food processing company or a factory, and processing of separating oil from water is performed to prevent the oil from flowing into rivers, oceans, and the like.

As a technique for separating oil and moisture, separation by an aggregating agent, adsorption separation, centrifugal separation, pressurized flotation separation, coarse grain separation by electrolytic floating, and separation by microbial degradation are known.

However, in a case of a separation method using the aggregating agent, there is a problem in terms of costs including collection of aggregates. Centrifugal separation and pressurized flotation separation are useful for public large-sized facilities, but are unsuitable for individual wastewater treatment flowing out from factories and stores.

As a small-sized oil-water separation filter that separates water and oil at low cost, for example, PTL 1 proposes an oil-water separation filter having both functions of water repellency and oil repellency.

However, in such an oil-water separation sheet, an oil-water separation membrane having both functions of water repellency and oil repellency is used, and therefore, water permeability is poor, and suction is required.

### Citation List

### Patent Literature

PTL 1: JP2020-138195A

### Summary of Invention

### Technical Problem

The present invention has been made in view of the above background, and an object thereof is to provide an oil-water separation sheet and an oil-water separation article capable of separating oil and moisture without requiring suction.

### Solution to Problem

The present inventors have made intensive studies to solve the above problems, and have completed the present invention. Thus, according to the present invention, the following inventions are provided.
1. An oil-water separation sheet including:
   a fiber having a single fiber diameter of 15.0 µm or less, in which
   the oil-water separation sheet is subjected to water absorption and oil repellency, and has air permeability of 50 cm³/cm²/sec or less.
2. The oil-water separation sheet according to 1, in which water absorbency is 60 seconds or less, and oil repellency is 180 seconds or more.
3. An oil-water separation article obtained by forming the oil-water separation sheet according to 1 or 2 into a bag shape and sealing a water absorbent fiber therein.
4. The oil-water separation article according to 3, in which the water absorbent fiber is a crosslinked sodium polyacrylate-based fiber or an acrylate-based fiber obtained by hydrolyzing a surface of an acrylic fiber.

### Advantageous Effects of Invention

According to the present invention, it is possible to provide an oil-water separation sheet and an oil-water separation article capable of separating oil and moisture without requiring suction.

### Description of Embodiments

Hereinafter, the present invention will be described in detail together with a preferred embodiment. First, an oil-water separation sheet according to the present invention includes fibers (hereinafter sometimes referred to as "ultrafine fibers") having a single fiber diameter of 15.0 µm or less (preferably 0.1 µm to 10.0 µm, and more preferably 0.1 µm to 5.0 µm). When the single fiber diameter is larger than 15.0 µm, an oil removal effect may be reduced, which is not preferable.

The single fiber diameter can be measured by capturing a single fiber cross-sectional photograph with a transmission electron microscope TEM at a magnification of 30000 times. At this time, in a TEM having a dimensional measurement function, measurement can be performed by utilizing the dimensional measurement function. In a TEM having no dimensional measurement function, a taken photograph may be enlarged and copied, and the measurement may be performed with a ruler in consideration of a scale. When a cross-sectional shape of the single fiber is a noncircular cross section other than a circular cross section, a diameter of a circumscribed circle of a cross section of the single fiber is used as a fiber diameter.

The ultrafine fibers may be long fibers, but short fibers having an aspect ratio (a ratio L/D of a fiber length L to a fiber diameter D) of 100 to 2500 are preferable.

A fiber type of the ultrafine fiber is not particularly limited, but a polyester fiber, a polyphenylene sulfide (PPS) fiber, a polyolefin fiber, or a nylon (Ny) fiber is preferable.

A polyester forming the polyester fiber is preferably polyethylene terephthalate (PET), polytrimethylene terephthalate, polybutylene terephthalate, polyethylene naphthalate, or a copolymer, which contains these as main repeating units, of an aromatic dicarboxylic acid, such as isophthalic acid or 5-sulfoisophthalic acid metal salt, or adipic acid, aliphatic dicarboxylic acid, such as sebacic acid, or hydroxycarboxylic acid condensation products such as ε-caplolactone, or glycol components such as diethylene glycol, trimethylene glycol, tetramethylene glycol, and hexamethylene glycol. A material-recycle or chemically recycled polyester, or polyethylene terephthalate prepared by using a monomer component obtained by using a biomass, that is, a biologically derived substance as a raw material, as disclosed in JP2009-091694A may be used. A polyester obtained using a catalyst containing a specific phosphorus compound and a titanium compound as disclosed in JP2004-270097A or JP2004-211268A may be used.

As a polyarylene sulfide resin forming the polyphenylene sulfide (PPS) fiber, any resin may be used as long as the resin belongs to a category referred to as a polyarylene sulfide resin. Examples of a structural unit of the polyarylene sulfide resin include a p-phenylene sulfide unit, an m-phenylene sulfide unit, an o-phenylene sulfide unit, a phenylene sulfide sulfone unit, a phenylene sulfide ketone unit, a phenylene sulfide ether unit, a diphenylene sulfide unit, a substituent-containing phenylene sulfide unit, and a branched-structure-containing phenylene sulfide unit. Among them, it is preferable that 70 mol% or more, particularly 90 mol% or more of the p-phenylene sulfide unit is contained, and poly(p-phenylene sulfide) is more preferable.

The polyolefin fiber includes a polypropylene fiber and a polyethylene fiber. The nylon fiber includes a nylon 6 fiber and a nylon 66 fiber.

A method for producing the ultrafine fibers is not particularly limited, but a method disclosed in WO2005/095686 is preferable. That is, from a viewpoint of the fiber diameter and uniformity thereof, it is preferable that a conjugate fiber having an island component formed of a fiber forming thermoplastic polymer and a sea component formed of a polymer (hereinafter, also referred to as an "easily soluble polymer"), which is more easily dissolved in an alkaline aqueous solution than the fiber forming thermoplastic polymer, is subjected to alkali reduction processing to dissolve and remove the sea component.

The oil-water separation sheet according to the present invention may contain a binder fiber. Such a binder fiber is preferably a conjugate fiber or an unstretched fiber. In the case of the unstretched fiber, a birefringence index Δn is usually 0.05 or less. An elongation of the unstretched fiber is usually 100% or more (preferably 100% to 800%).

Here, as the conjugate fiber, a core-sheath type conjugate fiber is preferable, in which a polymer component (for example, an amorphous copolymer polyester) that is fused by a heat treatment at 80°C to 170°C and exhibits an adhesion effect after papermaking is disposed in a sheath portion and another polymer (for example, a normal polyester such as polyethylene terephthalate, polytrimethylene terephthalate, or polybutylene terephthalate) having a melting point higher than that of the polymer by 20°C or more is disposed in a core portion.

The binder fiber may be a known binder fiber in which a binder component (low melting point component) forms all or a part of a surface of the single fiber. Examples thereof include the core-sheath type conjugate fiber, an eccentric sheath-core manner conjugate fiber, and a side-by-side type conjugate fiber.

The amorphous copolymer polyester is obtained as a random or block copolymer of an acid component, such as terephthalic acid, isophthalic acid, 2,6-naphthalene dicarboxylic acid, 5-sodium sulfoisophthalic acid, adipic acid, sebacic acid, azelaic acid, dodecanoic acid, or 1,4-cyclohexane dicarboxylic acid, and a diol component, such as ethylene glycol, 1,3-propanediol, 1,4-butanediol, 1,5-pentanediol, 1,6-hexanediol, diethylene glycol, 1,4-cyclohexanediol, or 1,4-cyclohexanedimethanol. Among them, terephthalic acid, isophthalic acid, ethylene glycol, and diethylene glycol, which are widely used in the related art, are preferably used as main components in terms of cost. Such a polyester copolymer has a glass transition point in a range of 50°C to 100°C and does not show a clear crystal melting point.

The unstretched fiber includes an unstretched fiber spun at a spinning speed of preferably 800 m/min to 1500 m/min (further preferably 900 m/min to 1150 m/min). Here, the unstretched fiber is preferably an unstretched fiber using the polyester, which is used as the island component or the sea component of the sea-island conjugate fiber, as at least one component. In particular, an unstretched polyester fiber using polyester, such as polyethylene terephthalate, polytrimethylene terephthalate, and polybutylene terephthalate, as at least one component, an unstretched polyphenylene sulfide (PPS) binder fiber using polyphenylene sulfide (PPS) as at least one component, an unstretched nylon fiber using nylon, such as nylon 6 and nylon 66, as at least one component, and an unstretched polyolefin fiber using polyolefin, such as polypropylene and polyethylene, as at least one component are preferable. An unstretched yarn of the sea-island conjugate fiber can also be used.

As a polyarylene sulfide resin forming the unstretched polyphenylene sulfide (PPS) binder fiber, any resin may be used as long as the resin belongs to a category referred to as a polyarylene sulfide resin. Examples of the structural unit of the polyarylene sulfide resin include a p-phenylene sulfide unit, an m-phenylene sulfide unit, an o-phenylene sulfide unit, a phenylene sulfide sulfone unit, a phenylene sulfide ketone unit, a phenylene sulfide ether unit, a diphenylene sulfide unit, a substituent-containing phenylene sulfide unit, and a branched-structure-containing phenylene sulfide unit. Among them, it is preferable that 70 mol% or more, particularly 90 mol% or more of the p-phenylene sulfide unit is contained, and poly(p-phenylene sulfide) is more preferable.

The oil-water separation sheet according to the present invention may be a woven fabric or a knitted fabric, but is preferably a non-woven fabric from a viewpoint of separation of oil and moisture. Examples of such a non-woven fabric include a non-woven fabric produced by a wet non-woven fabric, spun lace, air laid, needle punch, thermal bond, chemical bond, or the like. A multilayer structure in which two or more layers are stacked may be included. At this time, examples of a bonding method include thermal bonding, chemical bonding, and sewing.

Next, in the oil-water separation sheet according to the present invention, a sheet (base material) is subjected to water absorption and oil repellency. That is, a water-absorptive and oil-repellent agent is applied. As such water absorption and oil repellency, processing disclosed in WO2012/147582 is preferable. That is, a fluorine-containing polymer that contains, as essential components, a fluorine-containing monomer represented by
(a) general formula:

   CH₂=C(-X)-C(=O)-Y-[-(CH₂)ₘ-Z-]ₚ-(CH₂)ₙ-Rf (I)
   [in the formula, X represents a hydrogen atom, a methyl group, a fluorine atom, a chlorine atom, a bromine atom, an iodine atom, a CFX1X2 group (where X1 and X2 represent a hydrogen atom, a fluorine atom, or a chlorine atom), a cyano group, a linear or branched fluoroalkyl group having 1 to 20 carbon atoms, a substituted or unsubstituted benzyl group, or a substituted or unsubstituted phenyl group, Y represents -O- or -NH-, Z represents a direct bond, -S-, or -SO₂-, Rf represents a fluoroalkyl group having 1 to 12 carbon atoms, m represents 1 to 10, n represents 0 to 10, and p represents 0 or 1], and
   an alkoxy group-containing monomer represented by
(b) general formula:

   CH₂=C(X')-C(=O)-O-(RO)_{q}-H (II)

   [in the formula, X' represents a hydrogen atom or a methyl group, R represents an alkylene group having 2 to 4 carbon atoms in which a part or all of hydrogen atoms may be substituted with a hydroxyl group, and q is an integer of 1 to 50] is preferable.

Such a fluorine-containing polymer has excellent oil repellency and water absorbency, and can impart the oil repellency and the water absorbency to a cloth.

The fluorine-containing monomer (a) is represented by the general formula:

CH₂ = C(-X)-C(=O)-Y-[-(CH₂)ₘ-Z-]ₚ-(CH₂)ₙ-Rf (I)

[in the formula, X represents a hydrogen atom, a methyl group, a linear or branched alkyl group having 1 to 21 carbon atoms, a fluorine atom, a chlorine atom, a bromine atom, an iodine atom, a CFX1X2 group (where X1 and X2 represent a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, a substituted or unsubstituted phenyl group, Y represents -O- or -NH-, Z represents a direct bond, -S-, or -SO₂-, Rf represents a fluoroalkyl group having 1 to 12 carbon atoms, m represents 1 to 10, n represents 0 to 10, and p represents 0 or 1]. In the general formula (I), p is preferably 0. A preferable example of X is a hydrogen atom.

In the fluorine-containing monomer (a), a Rf group is generally a perfluoroalkyl group and/or a partially fluorinated fluoroalkyl group. The Rf group is preferably a perfluoroalkyl group. The number of carbon atoms of the Rf group is 1 to 12 carbon atoms (preferably 1 to 6). Examples of the Rf group include -CF₃, -CF₂CF₃, -CF₂CF₂CF₃, - CF(CF₃)₂, -CF₂CF₂CF₂CF₃, -CF₂CF(CF₃)₂, -C(CF₃)₃, -(CF₂)₄CF₃, - (CF₂)₂CF(CF₃)₂, -CF₂C(CF₃)₃, -CF(CF₃)CF₂CF₂CF₃, and -(CF₂)₅CF₃.

m is 1 to 10, for example, 2 to 5, and n is 0 to 10, for example, 1 to 6, and particularly preferably 2 to 5.

The fluorine-containing monomer (a) may be used alone or in combination of two or more thereof.

Examples of the fluorine-containing monomer (a) include the followings.

CH₂=C(-X)-C(=O)-O-(CH₂)ₘ-S-(CH₂)ₙ-Rf

CH₂=C(-X)-C(=O)-O-(CH₂)ₘ-SO₂-(CH₂)ₙ-Rf

CH₂=C(-X)-C(=O)-O-(CH₂)ₙ-Rf

CH₂=C(-X)-C(=O)-NH-(CH₂)ₙ-Rf

[in the above formula, X represents a hydrogen atom, a methyl group, a fluorine atom, a chlorine atom, a bromine atom, an iodine atom, or a CFX1X2 group (where X1 and X2 represent a hydrogen atom, a fluorine atom, or a chlorine atom), a cyano group, a linear or branched fluoroalkyl group having 1 to 20 carbon atoms, a substituted or unsubstituted benzyl group, a substituted or unsubstituted phenyl group, Rf represents 1 to 6 fluoroalkyl groups, m represents 1 to 10, and n represents 0 to 10].

Specific examples of the fluorine-containing monomer (a) include, but are not limited to, the following.

CH₂=C(-H)-C(=O)-O-(CH₂)₂-S-Rf

CH₂=C(-H)-C(=O)-O-(CH₂)₂-S-(CH₂)₂-Rf

CH₂=C(-H)-C(=O)-O-(CH₂)₃-SO₂-Rf

CH₂=C(-H)-C(=O)-O-(CH₂)₂-SO₂-(CH₂)₂-Rf

CH₂=C(-H)-C(=O)-O-(CH₂)₂-Rf

CH₂=C(-H)-C(=O)-NH-(CH₂)₂-Rf

CH₂=C(-H)-C(=O)-OCH₂CH₂N(C₂H₅)SO₂-Rf

CH₂=C(-H)-C(=O)-OCH₂CH₂N(CH₃)SO₂-Rf

CH₂=C(-H)-C(=O)-OCH₂CH(OCOCH₃)CH₂-Rf

CH₂=C(-CH₃)-C(=O)-O-(CH₂)₂-S-Rf

CH₂=C(-CH₃)-C(=O)-O-(CH₂)₂-S-(CH₂)₂-Rf

CH₂=C(-CH₃)-C(=O)-O-(CH₂)₃-SO₂-Rf

CH₂=C(-CH₃)-C(=O)-O-(CH₂)₂-SO₂-(CH₂)₂-Rf

CH₂=C(-CH₃)-C(=O)-O-(CH₂)₂-Rf

CH₂=C(-CH₃)-C(=O)-NH-(CH₂)₂-Rf

CH₂=C(-CH₃)-C(=O)-OCH₂CH₂N(C₂H₅)SO₂-Rf

CH₂=C(-CH₃)-C(=O)-OCH₂CH₂N(CH₃)SO₂-Rf

CH₂=C(-CH₃)-C(=O)-OCH₂CH(OCOCH₃)CH₂-Rf

CH₂=C(-F)-C(=O)-O-(CH₂)₂-S-Rf

CH₂=C(-F)-C(=O)-O-(CH₂)₂-S-(CH₂)₂-Rf

CH₂=C(-F)-C(=O)-O-(CH₂)₂-SO₂-Rf

CH₂=C(-F)-C(=O)-O-(CH₂)₂-SO₂-(CH₂)₂-Rf

CH₂=C(-F)-C(=O)-O-(CH₂)₂-Rf

CH₂=C(-F)-C(=O)-NH-(CH₂)₂-Rf

CH₂=C(-Cl)-C(=O)-O-(CH₂)₂-S-Rf

CH₂=C(-Cl)-C(=O)-O-(CH₂)₂-S-(CH₂)₂-Rf

CH₂=C(-Cl)-C(=O)-O-(CH₂)₂-SO₂-Rf

CH₂=C(-Cl)-C(=O)-O-(CH₂)₂-SO₂-(CH₂)₂-Rf

CH₂=C(-Cl)-C(=O)-O-(CH₂)₂-Rf

CH₂=C(-Cl)-C(=O)-NH-(CH₂)₂-Rf

CH₂=C(-CF₃)-C(=O)-O-(CH₂)₂-S-Rf

CH₂=C(-CF₃)-C(=O)-O-(CH₂)₂-S-(CH₂)₂-Rf

CH₂=C(-CF₃)-C(=O)-O-(CH₂)₂-SO₂-Rf

CH₂=C(-CF₃)-C(=O)-O-(CH₂)₂-SO₂-(CH₂)₂-Rf

CH₂=C(-CF₃)-C(=O)-O-(CH₂)₂-Rf

CH₂=C(-CF₃)-C(=O)-NH-(CH₂)₂-Rf

CH₂=C(-CF₂H)-C(=O)-O-(CH₂)₂-S-Rf

CH₂=C(-CF₂H)-C(=O)-O-(CH₂)₂-S-(CH₂)₂-Rf

CH₂=C(-CF₂H)-C(=O)-O-(CH₂)₂-SO₂-Rf

CH₂=C(-CF₂H)-C(=O)-O-(CH₂)₂-SO₂-(CH₂)₂-Rf

CH₂=C(-CF₂H)-C(=O)-O-(CH₂)₂-Rf

CH₂=C(-CF₂H)-C(=O)-NH-(CH₂)₂-Rf

CH₂=C(-CN)-C(=O)-O-(CH₂)₂-S-Rf

CH₂=C(-CN)-C(=O)-O-(CH₂)₂-S-(CH₂)₂-Rf

CH₂=C(-CN)-C(=O)-O-(CH₂)₂-SO₂-Rf

CH₂=C(-CN)-C(=O)-O-(CH₂)₂-SO₂-(CH₂)₂-Rf

CH₂=C(-CN)-C(=O)-O-(CH₂)₂-Rf

CH₂=C(-CN)-C(=O)-NH-(CH₂)₂-Rf

CH₂=C(-CF₂CF₃)-C(=O)-O-(CH₂)₂-S-Rf

CH₂=C(-CF₂CF₃)-C(=O)-O-(CH₂)₂-S-(CH₂)₂-Rf

CH₂=C(-CF₂CF₃)-C(=O)-O-(CH₂)₂-SO₂-Rf

CH₂=C(-CF₂CF₃)-C(=O)-O-(CH₂)₂-SO₂-(CH₂)₂-Rf

CH₂=C(-CF₂CF₃)-C(=O)-O-(CH₂)₂-Rf

CH₂=C(-CF₂CF₃)-C(=O)-NH-(CH₂)₂-Rf

CH₂=C(-F)-C(=O)-O-(CH₂)₃-S-Rf

CH₂=C(-F)-C(=O)-O-(CH₂)₃-S-(CH₂)₂-Rf

CH₂=C(-F)-C(=O)-O-(CH₂)₃-SO₂-Rf

CH₂=C(-F)-C(=O)-O-(CH₂)₃-SO₂-(CH₂)₂-Rf

CH₂=C(-F)-C(=O)-O-(CH₂)₃-Rf

CH₂=C(-F)-C(=O)-NH-(CH₂)₃-Rf

CH₂=C(-Cl)-C(=O)-O-(CH₂)₃-S-Rf

CH₂=C(-Cl)-C(=O)-O-(CH₂)₃-S-(CH₂)₂-Rf

CH₂=C(-Cl)-C(=O)-O-(CH₂)₃-SO₂-Rf

CH₂=C(-Cl)-C(=O)-O-(CH₂)₃-SO₂-(CH₂)₂-Rf

CH₂=C(-CF₃)-C(=O)-O-(CH₂)₃-S-Rf

CH₂=C(-CF₃)-C(=O)-O-(CH₂)₃-S-(CH₂)₂-Rf

CH₂=C(-CF₃)-C(=O)-O-(CH₂)₃-SO₂-Rf

CH₂=C(-CF₃)-C(=O)-O-(CH₂)₃-SO₂-(CH₂)₂-Rf

CH₂=C(-CF₂H)-C(=O)-O-(CH₂)₃-S-Rf

CH₂=C(-CF₂H)-C(=O)-O-(CH₂)₃-S-(CH₂)₂-Rf

CH₂=C(-CF₂H)-C(=O)-O-(CH₂)₃-SO₂-Rf

CH₂=C(-CF₂H)-C(=O)-O-(CH₂)₃-SO₂-(CH₂)₂-Rf

CH₂=C(-CN)-C(=O)-O-(CH₂)₃-S-Rf

CH₂=C(-CN)-C(=O)-O-(CH₂)₃-S-(CH₂)₂-Rf

CH₂=C(-CN)-C(=O)-O-(CH₂)₃-SO₂-Rf

CH₂=C(-CN)-C(=O)-O-(CH₂)₃-SO₂-(CH₂)₂-Rf

CH₂=C(-CF₂CF₃)-C(=O)-O-(CH₂)₃-S-Rf

CH₂=C(-CF₂CF₃)-C(=O)-O-(CH₂)₃-S-(CH₂)₂-Rf

CH₂=C(-CF₂CF₃)-C(=O)-O-(CH₂)₃-SO₂-Rf

CH₂=C(-CF₂CF₃)-C(=O)-O-(CH₂)₂-SO₂-(CH₂)₂-Rf

[In the formula, Rf represents 1 to 6 fluoroalkyl groups].

The alkoxy-containing monomer (b) is a non-fluorine monomer, and is a compound (alkylene glycol(meth)acrylate) represented by a general formula:
(b) general formula:

CH₂=C(X')-C(=O)-O-(RO)_{q}-H (II)

[in the formula, X' represents a hydrogen atom or a methyl group, R represents an alkylene group having 2 to 4 carbon atoms in which a part or all of the hydrogen atoms may be substituted with a hydroxyl group, and q represents an integer of 1 to 50].

In the alkoxy-containing monomer (b), q is preferably 1 to 30, for example, 2 to 10, particularly 2 to 5.

In the general formula (II), R is preferably ethylene or propylene, and particularly ethylene. R in the general formula (II) may be a combination of two or more alkylenes. In this case, at least one R is preferably ethylene. Examples of the combination of R include a combination of an ethylene group and a propylene group, and a combination of an ethylene group and a butylene group.

The alkoxy-containing monomer (b) may be a mixture of two or more types.

Specific examples of the alkoxy-containing monomer (b) include, but are not limited to, the following.

CH₂=CHCOO-(CH₂CH₂O)₉-H

CH₂=C(CH₃)COO-(CH₂CH₂O)₉-H

CH₂=C(CH₃)COO-(CH₂CH₂O)₂₃-H

CH₂=C(CH₃)COO-(CH₂CH₂O)₅₀-H

CH₂=C(CH₃)COO-(CH₂CH(CH₃)O)₉-H

CH₂=CHCOO-(CH₂CH(CH₃)O)₉-H

CH₂=C(CH₃)COO-(CH₂CH(CH₃)O)₉-H

CH₂=C(CH₃)COO-(CH₂CH₂O)₅-(CH₂CH(CH₃)O)₂-H

CH₂=C(CH₃)COO-(CH₂CH₂O)₈-(CH₂CH(CH₃)O)₆-H

The fluorine-based polymer may include (c) a crosslinkable monomer. The crosslinkable monomer (c) may be a compound having at least two reactive groups and/or carbon-carbon double bonds and not containing fluorine. The crosslinkable monomer (c) may be a compound having at least two carbon-carbon double bonds, or a compound having at least one carbon-carbon double bond and at least one reactive group. Examples of the reactive group include a hydroxyl group, an epoxy group, a chloromethyl group, a blocked isocyanate, and a carboxyl group.

The crosslinkable monomer (c) is preferably a non-fluorine crosslinkable monomer, and particularly preferably di(meth)acrylate.

The crosslinkable monomer (c) is preferably compound (alkylene glycol di(meth)acrylate) represented by a general formula:

CH₂=C(X")-C(=O)-O-(R"O)_{q}-C(=O)-C(X")=CH₂ (III)

[in the formula, X" represents a hydrogen atom or a methyl group;
R" represents an alkylene group having 2 to 10 carbon atoms in which a part or all of the hydrogen atoms may be substituted with a hydroxyl group, and q represents an integer of 1 to 50]. The number of carbon atoms of R" is 2 to 10, for example, 2 to 6, particularly 2 to 4. R" is preferably an ethylene group.

Specific examples of the alkylene glycol di(meth)acrylate represented by the formula (III) are as follows.

CH₂=C(CH₃)COO-(CH₂CH₂O)₅-COC(CH₃)=CH₂

CH₂=CHCOO-(CH₂CH₂O)₉-COCH=CH₂

CH₂=C(CH₃)COO-(CH₂CH(CH₃)O)₁₂-COCH=CH₂

CH₂=CHCOO-(CH₂CH₂O)₅-(CH₂CH(CH₃)O)₃-COCH=CH₂

CH₂=C(CH₃)COO-(CH₂CH₂O)₂₃-OOC(CH₃)C=CH₂

CH₂=C(CH₃)COO-(CH₂CH₂O)₂₀-(CH₂CH(CH₃)O)₅-COCH=CH₂

Other examples of the crosslinkable monomer (c) include, but are not limited to, diacetone(meth)acrylamide, (meth)acrylamide, N-methylol(meth)acrylamide, hydroxymethyl(meth)acrylate, hydroxyethyl(meth)acrylate, 3-chloro-2-hydroxypropyl(meth)acrylate, butadiene, chloroprene, glycidyl(meth)acrylate, 1,6-hexanediol acrylate, and neopentyl glycol diacrylate.

Other examples of the crosslinkable monomer (c) include isocyanate group-containing(meth)acrylates, such as glycerol(meth)acrylate, acetoacetoxyethyl(meth)acrylate, and 2-isocyanatoethyl methacrylate, and (meth)acrylates in which isocyanate groups are blocked with a blocking agent such as methyl ethyl ketoxime.

The crosslinkable monomer (c) may be a mixture of two or more types.

The fluorine-based polymer may include a (d) non-crosslinkable monomer. The non-crosslinkable monomer (d) is a monomer other than the alkoxy-containing monomer (b), generally a non-fluorine monomer. The non-crosslinkable monomer (d) is preferably a monomer not containing fluorine and having a carbon-carbon double bond. The non-crosslinkable monomer (d) is preferably a vinyl monomer not containing fluorine. The non-crosslinkable monomer is generally a compound having one carbon-carbon double bond.

Examples of the non-crosslinkable monomer (d) include, but are not limited to, butadiene, chloroprene, maleic acid derivative, vinyl halide such as vinyl chloride, ethylene, vinylidene halide such as vinylidene chloride, vinyl alkyl ether, styrene, alkyl(meth)acrylate, and vinyl pyrrolidone.

The non-crosslinkable monomer (d) may be a (meth)acrylic acid ester containing an alkyl group. The number of carbon atoms of the alkyl group may be 1 to 30, for example, 6 to 30, or 10 to 30. For example, the non-crosslinkable monomer may be an acrylate represented by the general formula:

CH₂=CA¹COOA²

[in the formula, A¹ represents a hydrogen atom or a methyl group, A² represents an alkyl group represented by CₙH₂ₙ₊₁ (n = 1 to 30)].

The fluorine-containing polymer contains 100 parts by weight of the fluorine-containing monomer (a). It is preferable that, with respect to 100 parts by weight of the fluorine-containing monomer (a),
an amount of the alkoxy-containing monomer (b) is 10 parts by weight to 400 parts by weight, for example, 25 parts by weight to 150 parts by weight, particularly 100 parts by weight to 43 parts by weight,
an amount of the crosslinkable monomer (c) is 30 parts by weight or less, for example, 0.1 parts by weight to 20 parts by weight, particularly 0.5 parts by weight to 10 parts by weight, and
an amount of the non-crosslinkable monomer (d) is preferably 20 parts by weight or less, for example, 0.1 parts by weight to 15 parts by weight, particularly 0.5 parts by weight to 10 parts by weight.

A weight-average molecular weight of the fluorine-containing polymer may be 1000 to 1000000, preferably 5000 to 500000. The weight-average molecular weight is a value obtained by gel permeation chromatography in terms of polystyrene.

Polymerization of the fluorine-containing polymer is not particularly limited, and various polymerization methods, such as bulk polymerization, solution polymerization, emulsion polymerization, and radiation polymerization can be selected. For example, solution polymerization using an organic solvent, or emulsion polymerization using water or a combination of an organic solvent and water is generally selected. After the polymerization, diluting is performed with water, or an emulsifier is added and emulsified in water to prepare a treatment liquid.

As properties of the fluorine-containing polymer before the fluorine-containing polymer is applied to the cloth, it is preferable that, after the polymerization (for example, the solution polymerization or the emulsion polymerization), water is added after the solvent is removed to disperse a polymer in water.

Examples of the organic solvent include ketones such as acetone and methyl ethyl ketone, esters such as ethyl acetate and methyl acetate, glycols such as propylene glycol, dipropylene glycol monomethyl ether, dipropylene glycol, tripropylene glycol, and low molecular weight polyethylene glycol, and alcohols such as ethyl alcohol and isopropanol.

As an emulsifier when the emulsifier is added and emulsified in water after the emulsion polymerization or polymerization, various general anionic, cationic, and nonionic emulsifiers can be used.

As a polymerization initiator, for example, a peroxide, an azo compound, or a persulfuric acid-based compound may be used. The polymerization initiator is generally water-soluble and/or oil-soluble.

Specific examples of the oil-soluble polymerization initiator preferably include 2,2'-azobis (2-methylpropionitrile), 2,2'-azobis(2-methylbutyronitrile), 2,2'-azobis(2,4-dimethylvaleronitrile), 2,2'-azobis(2,4-dimethyl4-methoxyvaleronitrile), 1,1'-azobis(cyclohexane-1-carbonitrile), dimethyl2,2'-azobis(2-methylpropionate), 2,2'-azobis(2-isobutyronitrile), benzoyl peroxide, di-tert-butyl peroxide, lauryl peroxide, cumene hydroperoxide, t-butyl peroxypivalate, diisopropyl peroxydicarbonate, and t-butyl peroxypivalate.

Specific examples of the water-soluble polymerization initiator preferably include 2,2'-azobisisobutylamidine dihydrochloride, 2,2'-azobis(2-methylpropionamidine) hydrochloride, 2,2'-azobis[2-(2-imidazoline-2-yl)propane] hydrochloride, 2,2'-azobis[2-(2-imidazoline-2-yl)propane] sulfate hydrate, 2,2'-azobis [2-(5-methyl-2-imidazoline-2-yl)propane] hydrochloride, potassium persulfate, barium persulfate, ammonium persulfate, and hydrogen peroxide.

The polymerization initiator is preferably an organic peroxide having a 10-hour half-life temperature of 40°C or higher. The polymerization initiator is particularly preferably t-butyl peroxypivalate.

The polymerization initiator is used in a range of 0.01 parts by weight to 5 parts by weight with respect to 100 parts by weight of the monomer.

To adjust a molecular weight, a chain transfer agent, for example, a mercapto group-containing compound may be used, and specific examples thereof include 2-mercaptoethanol, thiopropionic acid, and alkyl mercaptan. The mercapto group-containing compound is used in a range of 10 parts by weight or less and 0.01 parts by weight to 5 parts by weight with respect to 100 parts by weight of the monomer.

Specifically, the fluorine-containing polymer can be produced as follows.

In the solution polymerization, a method is adopted in which the monomer is dissolved in the organic solvent, the polymerization initiator is added after nitrogen substitution, followed by, for example, heating and stirring for 1 hour to 10 hours in a range of 40°C to 120°C. The polymerization initiator may generally be an oil-soluble polymerization initiator.

The organic solvent allows these to be dissolved in the monomer inactively, and examples include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, ethyl acetate, butyl acetate, 1,1,2,2-tetrachloroethane, 1,1,1-trichloroethane, trichloroethylene, perchloroethylene, tetrachlorodifluoroethane, and trichlorotrifluoroethane. The organic solvent is used in a range of 50 parts by weight to 2000 parts by weight, for example, 50 parts by weight to 1000 parts by weight with respect to total 100 parts by weight of the monomer.

In the emulsion polymerization, a method is adopted in which the monomer is emulsified in water in the presence of the emulsifier, the polymerization initiator is added after the nitrogen substitution, followed by stirring and polymerizing in a range of 40°C to 80°C for 1 hour to 10 hours. Examples of the polymerization initiator include water-soluble polymerization initiator, such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, azobisisobutyronitrile, sodium peroxide, potassium persulfate, and ammonium persulfate, and oil-soluble polymerization initiator, such as azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator is used in a range of 0.01 parts by weight to 10 parts by weight with respect to 100 parts by weight of the monomer.

To obtain a polymer water-dispersed liquid excellent in shelf stability, it is desirable to use an emulsifying apparatus capable of imparting strong crushing energy, such as a high-pressure homogenizer or an ultrasonic homogenizer, to micronize the monomer into water and to perform polymerization using the oil-soluble polymerization initiator. As the emulsifier, various anionic, cationic, or nonionic emulsifiers can be used, and are used in a range of 0.5 parts by weight to 20 parts by weight with respect to 100 parts by weight of the monomer. It is preferable to use an anionic and/or nonionic and/or cationic emulsifier. When the monomers are not completely compatible with each other, it is preferable to add a compatibilizer that allows these monomers to be sufficiently compatible with each other, such as a water-soluble organic solvent or a low molecular weight monomer. By adding the compatibilizer, emulsifiability and copolymerizability can be improved.

Examples of the water-soluble organic solvent include acetone, methyl ethyl ketone, ethyl acetate, propylene glycol, dipropylene glycol monomethyl ether, dipropylene glycol, tripropylene glycol, and ethanol, and may be used in a range of 1 part by weight to 50 parts by weight, for example, 10 parts by weight to 40 parts by weight with respect to 100 parts by weight of water. Examples of the low molecular weight monomer include methyl methacrylate, glycidyl methacrylate, and 2,2,2-trifluoroethyl methacrylate, and may be used in a range of 1 parts by weight to 50 parts by weight, for example, 10 parts by weight to 40 parts by weight with respect to 100 parts by weight of a total amount of monomers.

The treatment liquid containing the fluorine-containing polymer is preferably in a form of a solution, an emulsion, or an aerosol. The treatment liquid contains the fluorine-containing polymer and a medium (for example, an organic solvent and a liquid medium such as water). In the treatment liquid, a concentration of the fluorine-containing polymer may be, for example, 0.01% by weight to 50% by weight.

Here, when the fluorine-containing polymer is attached to the sheet together with a quaternary ammonium salt by including the quaternary ammonium salt in the treatment liquid, a cationic property of the fluorine-containing polymer is enhanced by an ion effect of the quaternary ammonium salt. As a result, when organic fibers forming the sheet are the polyester fibers, the fluorine-containing polymer is likely to adhere to the polyester fibers that are anionically charged, and oil repellency and water absorbency are further improved, which is preferable. Since the quaternary ammonium salt usually has an antibacterial property, the antibacterial property is added to the cloth.

As such a quaternary ammonium salt, the following is preferably used. 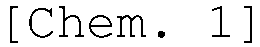 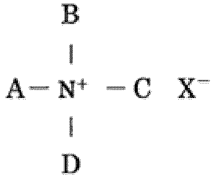 Substituents of A, B, C and D are any of the following substituents, and X represents a halogen.

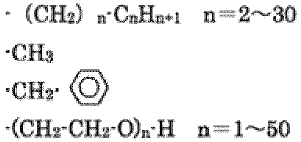

When the fluorine-containing polymer is attached to the sheet together with a binder resin by including the binder resin in the treatment liquid, the fluorine-containing polymer is firmly attached to the fibers, and thus durability, such as oil repellency, water absorbency, and antibacterial property, is improved, which is preferable.

In this case, the binder resin to be used is preferably a melamine binder resin. When the melamine binder resin is used as the binder resin, since a solubility parameter SP value of the melamine binder resin is close to that of the polyester fiber, when the fibers constituting the sheet are polyester fibers, the fluorine-containing polymer adheres to a single fiber of the polyester fiber in a membrane shape. As a result, not only the durability, such as oil repellency, water absorbency, and antibacterial property, is improved, but also the softness of the sheet is improved, which is preferable.

Here, when a silicone binder resin is used as the binder resin, the water absorbency of the cloth may be impaired because the silicone binder resin is hydrophobic. When an isocyanate binder resin is used as the binder resin, the durability, such as oil repellency, washing removability of dirt, water absorbency, and antibacterial property, may decrease, and a cyan gas may also be generated. When an acrylic binder resin is used as the binder resin, since the acrylic binder resin is not crosslinkable, the durability, such as oil repellency, water absorbency, and antibacterial property, may decrease.

As a method of attaching the treatment liquid to the sheet, a known method in the related art can be adopted. Usually, a method is adopted in which the treatment liquid is dispersed in an organic solvent or water, diluted, and attached to a surface of a treatment object by a known method, such as dip coating, spray coating, or foam coating, followed by drying (surface treatment). In the case of the surface treatment, the fluorine-containing polymer may have a ratio of the fluorine-containing polymer to a weight of the cloth of 0.01% by weight to 3.0% by weight (more preferably 0.5% by weight to 2.0% by weight).

When the fluorine-containing polymer having a concentration of perfluorooctanoic acid and/or perfluorooctanesulfonic acid of 5 ng/g or less adheres to the sheet as described above, environmental problems are considered.

When the fluorine-containing polymer is attached to the sheet together with the quaternary ammonium salt, not only the oil repellency and the water absorbency are further improved, but also the antibacterial property is added to the sheet.

Since the oil-water separation sheet thus obtained has the above-described configuration, it is possible to separate oil and moisture without requiring suction. At this time, in the oil-water separation sheet, it is important that the air permeability is 50 cm³/cm²/sec or less (more preferably 0.1 cm³/cm²/sec to 40 cm³/cm²/sec). When the air permeability exceeds 50 cm³/cm²/sec, a performance of separating oil and moisture may deteriorate.

Here, it is preferable that the water absorbency of the oil-water separation sheet is measured by a JIS L1907 water absorption speed method (dropping method) and the water absorbency is 60 seconds or less. In terms of the oil repellency, when 40 µL of n-hexadecane is dropped from a height of 5 cm above the sheet and the permeability is visually determined, it is preferable that the n-hexadecane does not permeate into the sheet for 180 seconds or more.

The oil-water separation sheet thus obtained may have a multilayer structure of, for example, two or more layers, and the single fiber diameters of the constituent fibers of each layer may be different from each other. The layer with the smaller single fiber diameter (ultrafine fiber layer) may be arranged on an inlet side in a discharge path through which an oil-water mixture liquid is discharged, thereby effectively separating the moisture and oil from the oil-water mixture liquid.

Here, in a case of the oil-water mixed with the oil-water separation solid matter, the solid content may be collected in the ultrafine fiber layer, and a filtration pressure may be increased, but in this case, it is preferable to dispose a sheet for collecting the solid matter in front of the inflow side of the oil-water separation sheet.

A shape of the oil-water separation sheet is not limited to a flat plate shape, and may be any shape such as a corrugated shape. Further, known functional processing, such as normal water repellent processing, flame proof processing, flame retardant processing, dyeing processing, and negative ion generation processing, may be added. Such an oil-water separation sheet is useful as a sheet for a filter that separates water and oil in oil-water in which water within 10% (more preferably within 5%) is mixed in oil, and oil-water in which oil within several % is mixed in water. Specifically, it is particularly suitable for applications such as removing water from an oil tank.

Next, the oil-water separation article according to the present invention is an oil-water separation article obtained by forming the oil-water separation sheet into a bag shape and sealing a water absorbent fiber therein. This oil-water separation article is an oil-water separation article useful, for example, when a large amount of water is mixed with oil, such as at a mixture ratio of water and oil of 30/70 weight ratio.

Here, it is preferable that the water absorbent fiber is a fiber having an ability to absorb and swell in water, has both a function as a fiber and a function as a highly absorbent polymer, and has a water absorption property of 20 times or more (more preferably 40 times to 100 times) its own weight. When a water absorption amount is less than 20 times, the water absorption amount is small, and the degree of swelling is also reduced. Therefore, an effect of preventing leakage to the outside may be reduced. Examples of the water absorbent fiber having a water absorption property of 20 times or more the own weight include, but are not particularly limited to, a water absorbent fiber spun from highly absorbent polymers obtained by crosslinking starch graft polymers, polyacrylic acid polymers, or polyvinyl alcohol polymers, and highly absorbent polymers such as thermoplastic absorbent polymers containing polyalkylene oxide units. In particular, a crosslinked sodium polyacrylate-based fiber or an acrylate-based fiber obtained by hydrolyzing the surface of the acrylic fiber is preferable. The highly absorbent polymer can absorb and retain water from several hundred times to about one thousand times its own weight. In particular, it is known that a polymer of acrylic acid has a very high hydrophilicity because it has a large number of carboxyl groups, is crosslinked to a network structure and is converted into the sodium salt form to form a gel having high water absorption, and exhibits excellent properties.

Such an oil-water separation article does not require suction and can separate oil and moisture. For example, by immersing the article sample in oil mixed with water, only water can be selectively removed.

### Examples

The oil-water separation sheet according to the present invention will be specifically described below with reference to Examples. The following evaluations were performed in Examples and Comparative Examples.

### (1) Single Fiber Diameter

A single fiber cross-sectional photograph was taken and measured with a transmission electron microscope TEM at a magnification of 30000 times, and an average thereof was obtained with the number of samples of 5.

### (2) Porosity

From the basis weight, thickness, and resin density, a value was obtained by the following calculation formula, and porosity was obtained by rounding off the first decimal place of the obtained value. 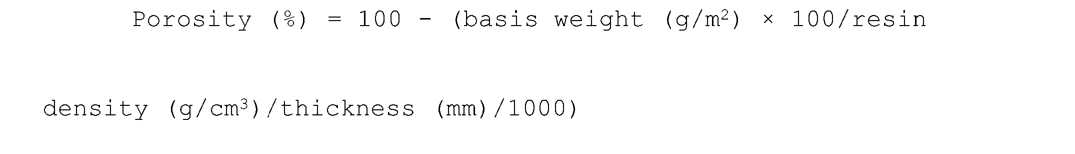 Porosity (%) = 100 - (basis weight (g/m2) × 100/resin density (g/cm3)/thickness (mm)/1000)

### (3) Air Permeability

Air permeability was measured by a JIS L1096A method (Frazier method).

### (4) Water Absorbency (Hydrophilic Property)

The water absorbency of the oil-water separation sheet was measured by a JIS L1907 water absorption speed method (dropping method). Evaluation results were defined as follows.
A: After dripping droplets onto an oil-water separation filter material, penetration occurs within 60 seconds.
B: After dripping droplets onto an oil-water separation filter material, penetration occurs between 60 seconds and 180 seconds.
C: After dripping droplets onto an oil-water separation filter material, no penetration for 180 seconds or more

### (5) Oil Repellency

40 µL of n-hexadecane was added dropwise to the oil-water separation sheet at a height of 5 cm above the sheet, and permeability thereof was visually determined based on the following definition to evaluate oil repellency.
A: After dripping droplets onto an oil-water separation filter material, no penetration for 180 seconds or more.
B: After dripping droplets onto an oil-water separation filter material, penetration occurs between 60 seconds and 180 seconds.
C: After dripping droplets onto an oil-water separation filter material, penetration occurs within 60 seconds.

### (6) Adaptability for Removing Water from Oil

Adaptability for removing water from oil was evaluated from the above water absorbency and oil repellency. A case where both water absorbency and oil repellency were A was evaluated as "good", a case where only one of water absorbency and oil repellency was A was evaluated as "normal", and a case where both water absorbency and oil repellency were B or C was evaluated as "poor".

### (7) Permeability of Emulsified Solution

To the produced oil-water separation sheet, n-hexadecane and water were mixed in a weight ratio of 6:1 from a height of 5 cm above the sheet, and after thorough stirring to confirm that it was in a suspended state, 40 µL of the solution was dropped. The permeability was visually inspected, and the water absorbency and oil repellency were evaluated in the same manner as above. A case where both the water absorbency and the oil repellency were A was evaluated as "good", a case where either water absorbency or oil repellency was C was evaluated as "poor", and the other cases were evaluated as B (normal).

### (8) Basis Weight and Thickness

Measured according to JIS L1096.

### [Example 1]

A 100 ml four-necked flask equipped with a reflux condenser, a nitrogen inlet tube, a thermometer, and a stirring device was charged with 18.6 g of fluorine-containing monomer CH₂=CHC(=O)O-CH₂CH₂C₆F₁₃, 11.4 g of polyethylene glycol acrylate CH₂=CHC(=O)O-(CH₂CH₂O)n-H(BLEMMER AE90, manufactured by NOF Corporation, average value of n being 2, hereinafter referred to as AE90(b)), 0.3 g of 2-mercaptoethanol, and 45 g of methyl ethyl ketone (hereinafter, referred to as MEK), and nitrogen bubbling was performed for 30 minutes. After an internal temperature was raised from room temperature to 50°C to 65°C under a nitrogen stream, 0.4 g of Perbutyl PV (hereinafter referred to as PV) was added, followed by reacting at 60°C to 65°C for 6 hours. The MEK was distilled off from an obtained solution at about 70°C under reduced pressure conditions to obtain a pale yellow polymer residue, 122.4 g of water was added, the internal temperature was maintained at about 80°C for 1 hour or more, and then cooled to prepare a water-dispersed liquid of a fluorine-based compound having a solid content concentration of about 20% by weight.

Next, a treatment liquid composed of 5 wt% of the water-dispersed liquid (comparison of the weight of the treatment liquid), 0.5 wt% of the melamine binder resin (comparison of the weight of the treatment liquid), 0.1 wt% of the catalyst (comparison of the weight of the treatment liquid), and 94.4 wt% of ion-exchanged water (comparison of the weight of the treatment liquid) was obtained.

In contrast, crimped short fibers (single fiber fineness 2.2 dtex, single fiber diameter 14 µm, fiber length 51 mm) made of polyethylene terephthalate (PET) and core-sheath composite type thermoadhesive short fibers (core/sheath = 50/50, core: polyethylene terephthalate having a melting point of 256°C, sheath: polyester copolymer with a softening point of 110°C, consisting mainly of terephthalic acid, isophthalic acid, ethylene glycol, and diethylene glycol) were mixed at a mixing ratio of 80/20 (% by weight), passed through a carding machine, and then heat-treated in a hot-air circulation dryer at 140°C for 5 minutes to obtain a non-woven fabric having a basis weight of 50 g/m². In addition, a nanofiber fiber A (polyester fiber) having a fiber diameter of 700 nm × a length of 0.5 mm, a binder fiber B, (core/sheath = 50/50, core: polyethylene terephthalate having a melting point of 256°C, sheath: amorphous copolymer polyester mainly composed of terephthalic acid, isophthalic acid, ethylene glycol, and diethylene glycol), which is a core-sheath composite heat-fusible fiber and has a single fiber fineness of 2.2 dtex (single fiber diameter of 14.3 µm) × a length of 5 mm, and a fiber C (polyester fiber) having a single fiber fineness of 0.6 dtex (single fiber diameter of 7.5 µm) × a length of 5 mm were blended at a ratio of A: B: C = 30:30:40, a slurry dispersed in water was used to prepare a non-woven fabric by a wet papermaking method, and the fabric was dried in a Yankee dryer (120°C) to obtain a wet non-woven fabric having a basis weight of 20 g/m².

The obtained two non-woven fabrics were bonded with a spray paste to obtain base materials shown in Table 1.

Next, the bonded base material was impregnated with the treatment liquid, squeezed to a squeezing ratio of 100%, dried at 130°C for 5 minutes, and further dried at 180°C for 1 minute to obtain an oil-water separation sheet. A proportion of the fluorine-containing polymer to the oil-water separation sheet was 1% by weight.

Water and oil were added dropwise to the oil-water separation sheet, water absorbency and oil repellency were evaluated, and permeability in a state in which water and oil were emulsified was also evaluated. Table 1 shows evaluation results.

Next, an oil-water separation article obtained by forming the oil-water separation sheet into a bag shape and sealing the water absorbent fiber therein was obtained. At that time, "BELL OASIS" (trade name) manufactured by TEIJIN FRONTIER CO., LTD. (crosslinked sodium polyacrylate-based fiber, water absorption rate (50 times of its own weight), single fiber fineness 10 dtex, fiber length 5 mm) was used as the water absorbent fiber. It was confirmed that only water was selectively removed by immersing such an oil-water separation article in oil mixed with water. It was confirmed that only water was selectively removed even with a liquid in a state in which water and oil were sufficiently stirred and emulsified.

### [Example 2]

An oil-water separation sheet was obtained in the same manner as in Example 1, except that instead of the wet non-woven fabric in Example 1, crimped short fibers (single fiber fineness 2.2 dtex, single fiber diameter 14 µm, fiber length 51 mm) made of polyethylene terephthalate (PET) and core-sheath composite type thermoadhesive short fibers (core/sheath = 50/50, core: polyethylene terephthalate having a melting point of 256°C, sheath: polyester copolymer with a softening point of 110°C, consisting mainly of terephthalic acid, isophthalic acid, ethylene glycol, and diethylene glycol) were mixed at a mixing ratio of 80/20 (% by weight), passed through a carding machine, and then heat-treated in a hot-air circulation dryer at 140°C for 5 minutes, and a non-woven fabric having a basis weight of 100 g/m² was used. Table 1 shows the evaluation results.

Next, an oil-water separation article obtained by forming the oil-water separation sheet into a bag shape and sealing the water absorbent fiber therein was obtained. At that time, "BELL OASIS" (trade name) manufactured by TEIJIN FRONTIER CO., LTD. (crosslinked sodium polyacrylate-based fiber, water absorption rate (50 times of its own weight), single fiber fineness 10 dtex, fiber length 5 mm) was used as the water absorbent fiber. It was confirmed that only water was selectively removed by immersing such an oil-water separation article in oil mixed with water. It was confirmed that only water was selectively removed even with a liquid in a state in which water and oil were sufficiently stirred and emulsified.

### [Comparative Example 1]

An oil-water separation sheet was obtained in the same manner as in Example 1, except that instead of the wet non-woven fabric in Example 1, crimped short fibers (fineness 2.2 dtex, single fiber diameter 14 µm, fiber length 51 mm) made of polyethylene terephthalate (PET) and core-sheath composite type thermoadhesive short fibers (core/sheath = 50/50, core: polyethylene terephthalate having a melting point of 256°C, sheath: polyester copolymer with a softening point of 110°C, consisting mainly of terephthalic acid, isophthalic acid, ethylene glycol, and diethylene glycol) were mixed at a mixing ratio of 80/20 (% by weight), passed through a carding machine, and then heat-treated in a hot-air circulation dryer at 140°C for 5 minutes, and a non-woven fabric having a basis weight of 20 g/m² was used. Table 1 shows the evaluation results.

Next, an oil-water separation article obtained by forming the oil-water separation sheet into a bag shape and sealing the water absorbent fiber therein was obtained. At that time, "BELL OASIS" (trade name) manufactured by TEIJIN FRONTIER CO., LTD. (crosslinked sodium polyacrylate-based fiber, water absorption rate (50 times of its own weight), single fiber fineness 10 dtex, fiber length 5 mm) was used as the water absorbent fiber. Such an oil-water separation article was immersed in oil mixed with water, but it was not possible to selectively remove only the water.

### [Comparative Example 2]

An oil-water separation sheet was obtained in the same manner as in Example 1, except that instead of the wet non-woven fabric in Example 1, crimped short fibers (fineness 2.2 dtex, single fiber diameter 14 µm, fiber length 51 mm) made of polyethylene terephthalate (PET) and core-sheath composite type thermoadhesive short fibers (core/sheath = 50/50, core: polyethylene terephthalate having a melting point of 256°C, sheath: polyester copolymer with a softening point of 110°C, consisting mainly of terephthalic acid, isophthalic acid, ethylene glycol, and diethylene glycol) were mixed at a mixing ratio of 80/20 (% by weight), passed through a carding machine, and then heat-treated in a hot-air circulation dryer at 140°C for 5 minutes, and a non-woven fabric having a basis weight of 50 g/m² was used. Table 1 shows the evaluation results.

Next, an oil-water separation article obtained by forming the oil-water separation sheet into a bag shape and sealing the water absorbent fiber therein was obtained. At that time, "BELL OASIS" (trade name) manufactured by TEIJIN FRONTIER CO., LTD. (crosslinked sodium polyacrylate-based fiber, water absorption rate (50 times of its own weight), single fiber fineness 10 dtex, fiber length 5 mm) was used as the water absorbent fiber. It was confirmed that only water was selectively removed by immersing such an oil-water separation article in oil mixed with water. However, it is not possible to selectively remove only water from a liquid in a state in which water and oil were sufficiently stirred and emulsified.

### [Comparative Example 3]

An oil-water separation sheet was obtained in the same manner as in Example 1 except that the wet non-woven fabric was not used in Example 1. Table 1 shows the evaluation results.

Next, an oil-water separation article obtained by forming the oil-water separation sheet into a bag shape and sealing the water absorbent fiber therein was obtained. At that time, "BELL OASIS" (trade name) manufactured by TEIJIN FRONTIER CO., LTD. (crosslinked sodium polyacrylate-based fiber, water absorption rate (50 times of its own weight), single fiber fineness 10 dtex, fiber length 5 mm) was used as the water absorbent fiber. Such an oil-water separation article was immersed in oil mixed with water, but it was not possible to selectively remove only the water.

### [Comparative Example 4]

An oil-water separation sheet was obtained in the same manner as in Example 1 except that the water absorption and oil repellency was not performed in Example 1. Table 1 shows the evaluation results.

Next, an oil-water separation article obtained by forming the oil-water separation sheet into a bag shape and sealing the water absorbent fiber therein was obtained. At that time, "BELL OASIS" (trade name) manufactured by TEIJIN FRONTIER CO., LTD. (crosslinked sodium polyacrylate-based fiber, water absorption rate (50 times of its own weight), single fiber fineness 10 dtex, fiber length 5 mm) was used as the water absorbent fiber. Such an oil-water separation article was immersed in oil mixed with water, but it was not possible to selectively remove only the water.

**[Table 1]**

| | - | | Ex. 1 | Ex. 2 | Comp. Ex. 1 | Comp. Ex. 2 | Comp. Ex. 3 | Comp. Ex. 4 |
|---|---|---|---|---|---|---|---|---|
| Configuration | Upper layer | Basis weight g/m² | 20 | 100 | 20 | 50 | None | 20 |
| | | Porosity% | 26.8 | 79.9 | 82.9 | 83.9 | - | 26.8 |
| | | Air permeability cm³/cm²·s | 1.00 | 56.25 | 381.25 | 136.75 | - | 1 |
| | Lower layer | Basis weight g/m² | 50 | 50 | 50 | 50 | 50 | 50 |
| | | Porosity% | 83.9 | 83.9 | 83.9 | 83.9 | 83.9 | 83.9 |
| | | Air permeability cm³/cm²·s | 136.75 | 136.75 | 136.75 | 136.75 | 136.75 | 136.75 |
| | Presence or Absence of Processing | Water absorption and oil repellency | Presence | Presence | Presence | Presence | Presence | None |
| Basis weight | g/m² | | 86 | 165 | 86 | 113 | 52 | 86 |
| Thickness | mm | | 0.28 | 0.57 | 0.34 | 0.44 | 0.21 | 0.26 |
| Air permeability | Air permeability cm³/cm²·s | | 0.86 | 34.98 | 99.14 | 66.26 | 138.20 | 0.85 |
| Lyophilicity evaluation | Water absorption | | A | A | B | A | B | C |
| | Oil repellent | | A | A | A | A | A | B |
| | Adaptability for removing water from oil | | Good | Good | Normal | Good | Normal | Poor |
| | Water and oil mixed liquid water absorption | | A | A | C | C | C | C |
| | Water and oil mixed liquid oil repellent | | A | A | A | A | A | C |
| | Adaptability for removing water from emulsion | | Good | Good | Poor | Poor | Poor | Poor |

| | | | | | | | | |
|---|---|---|---|---|---|---|---|---|
| **"Ex." and "Comp. Ex." represent "Example" and "Comparative Example", respectively.** | | | | | | | | |

### Industrial Applicability

According to the present invention, an oil-water separation sheet and an oil-water separation article capable of separating oil and moisture without requiring suction are provided, and an industrial value thereof is extremely large.

## Claims

1. An oil-water separation sheet comprising:
a fiber having a single fiber diameter of 15.0 µm or less, wherein
the oil-water separation sheet is subjected to water absorption and oil repellency, and has air permeability of 50 cm³/cm²/sec or less.

2. The oil-water separation sheet according to claim 1, wherein
water absorbency is 60 seconds or less, and oil repellency is 180 seconds or more.

3. An oil-water separation article obtained by forming the oil-water separation sheet according to claim 1 or 2 into a bag shape and sealing a water absorbent fiber therein.

4. The oil-water separation article according to claim 3, wherein
the water absorbent fiber is a crosslinked sodium polyacrylate-based fiber or an acrylate-based fiber obtained by hydrolyzing a surface of an acrylic fiber.
